# EUROPEAN PATENT APPLICATION

(11) **EP 4 800 546 A1**
(43) Date of publication of application: **02.09.2026**
(21) Application number: 25227726.4
(22) Date of filing: 30.12.2025
(51) Int. Cl.: G06F 8/71

(54) **SYSTEMS AND METHODS FOR CODE REBASING AND/OR CONFLICT RESOLUTION**

(30) Priority: 26.02.2025 US 202563763391 P; 07.05.2025 US 202519200907
(71) Applicant: Palantir Technologies Inc., Aventura, Florida 33180 (US)
(72) Inventor: SKROBOLA, Matthew, New York (US); RYAN, Paul, New York (US); DUCZYNSKI, Michal, London (GB); ZHANG, Andy, New York (US); SLATCHER, Timothy, Golden (US); ASHOUSH, Daniela, London (GB); WANG, Xinyi, New York (US); RUSAK, Damian, Wroclaw (PL); TAM, Ka-Wing Courtney, New York (US)
(74) Representative: Sayer, Robert David

(57) **Abstract**

Systems and methods for code rebasing/conflict resolution are provided. For example, method for rebasing a software project is comprises: determining a set of changes between a branch version and a main version of the software project; identifying, from the set of changes, a conflict between the branch version and the main version; generating a user interface comprising at least one of: a first graphical representation of the conflict as implemented in the main version; or a second graphical representation of the conflict as implemented in the branch version; receiving, via the user interface, user input indicating a resolution for the presented conflict; and updating the branch version of the software project according to the indicated resolution, thereby resolving the conflict to facilitate merging of the branch of the software project onto the main version of the software project; wherein the method is performed using one or more processors.

## Description

This application claims priority U.S. Provisional Application No. 63/763,291, filed February 26, 2025.

### TECHNICAL FIELD

Certain embodiments of the present disclosure are directed to systems and methods for code rebasing and/or conflict resolution. More particularly, some embodiments of the present disclosure relate to code rebasing and/or conflict resolution in the context of a low- or no-code development environment.

### BACKGROUND

Software versioning and branching can enable multiple developers to work on a software project contemporaneously. However, if one developer makes modifications to a main branch of the software project, conflicts may arise when another developer attempts to merge their own modified branch onto the main branch of the software project. Conflicts are problematic at the technical level for the reason that they may not allow the software project to work correctly which may affect downstream processes and systems which are reliant on correct operation. Additionally, such challenges may be exacerbated in instances where the software project is developed using a low-/no-code development environment, as conflict resolution may traditionally be a code-heavy task that may be daunting to an individual having little coding experience.

Hence it is desirable to improve the techniques for code rebasing and/or conflict resolution.

### SUMMARY

Certain embodiments of the present disclosure are directed to systems and methods for code rebasing and/or conflict resolution. More particularly, some embodiments of the present disclosure provide systems and methods for rebasing a software project.

In some embodiments, a method for rebasing a software project is provided. In certain embodiments, the method comprises: determining a set of changes between a branch version of the software project and a main version of the software project; identifying, from the set of changes, a conflict between the branch version and the main version; generating a user interface comprising at least one of: a first graphical representation of the conflict as implemented in the main version; or a second graphical representation of the conflict as implemented in the branch version; receiving, via the user interface, user input indicating a resolution for the presented conflict; and updating the branch version of the software project according to the indicated resolution, thereby resolving the conflict to facilitate merging of the branch of the software project onto the main version of the software project; wherein the method is performed using one or more processors.

In certain embodiments, another method for rebasing a software project is provided. In some embodiments, the method comprises: determining a set of changes between a branch version of the software project and a main version of the software project; identifying, from the set of changes, a conflict between the branch version and the main version; generating a user interface comprising: a first graphical representation of the conflict as implemented in the branch version; and in response to user input indicating a selection of the conflict as implemented in the main version, a second graphical representation of the conflict as implemented in the main version; receiving, via the user interface, user input indicating a resolution for the presented conflict; and updating the branch version of the software project according to the indicated resolution, thereby resolving the conflict to facilitate merging of the branch of the software project onto the main version of the software project; wherein the method is performed using one or more processors.

In some embodiments, a system for rebasing a branch of a software project is provided. In certain embodiments, the system comprises: one or more memories comprising instructions stored thereon; and one or more processors configured to execute the instructions and perform operations comprising: determining a set of changes between a branch version of the software project and a main version of the software project; identifying, from the set of changes, a conflict between the branch version and the main version; generating a user interface comprising at least one of: a first graphical representation of the conflict as implemented in the main version; or a second graphical representation of the conflict as implemented in the branch version; receiving, via the user interface, user input indicating a resolution for the presented conflict; and updating the branch version of the software project according to the indicated resolution, thereby resolving the conflict to facilitate merging of the branch of the software project onto the main version of the software project.

Depending upon embodiment, one or more benefits may be achieved. These benefits and various additional objects, features and advantages of the present invention can be fully appreciated with reference to the detailed description and accompanying drawings that follow.

### BRIEF DESCRIPTION OF THE DRAWINGS

FIG. 1 illustrates a method for code rebasing and/or conflict resolution according to certain embodiments of the present disclosure.
FIG. 2 illustrates a method for processing user input for code rebasing and/or conflict resolution according to certain embodiments of the present disclosure.
FIG. 3 illustrates an example system in which aspects of the present disclosure may be practiced.
FIG. 4 illustrates an example user interface from which code rebasing can be initiated according to certain embodiments of the present disclosure.
FIG. 5 illustrates another example user interface from which code rebasing can be initiated according to certain embodiments of the present disclosure.
FIG. 6 illustrates another example user interface from which code rebasing can be initiated according to certain embodiments of the present disclosure.
FIG. 7 illustrates an example user interface for code rebasing according to certain embodiments of the present disclosure.
FIG. 8 illustrates an example user interface for conflict resolution according to certain embodiments of the present disclosure.
FIG. 9 illustrates another example user interface for conflict resolution according to certain embodiments of the present disclosure.
FIG. 10 is a simplified diagram showing a computing system for implementing aspects of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

According to some embodiments, the disclosed systems and methods for code rebasing and/or conflict resolution are used with respect to a low- or no-code software development environment. For instance, rather than manually composing source code, the software development environment enables a developer to instead design a software project via a user interface. For example, the a developer operates the user interface of the software development environment to define one or more pages of the software project, one or more sections within a page, one or more widgets within a section, and/or one or more variables (e.g., as may be processed to display data via a widget or table), among other examples. These and other aspects of a software project may be referred to herein as "elements" of the software project. In examples, the software development environment provides a drag-and-drop user interface, such that the developer can drag/arrange different elements via the user interface, thereby authoring a user interface for the software project accordingly. Thus, the software development environment generates corresponding code as a result of the developer providing user input via the user interface of the software development environment.

However, resolving software development conflicts (e.g., between different versions of a software project) may be challenging in the context of such a software development environment, as developers may be less experienced in reviewing source code, such that traditional software differencing techniques (e.g., presenting lines of code for review that have been added, removed, and/or changed) are undesirable or inapplicable. Additionally, other conflict resolution techniques may be overly restrictive, as, for example, requesting that a developer selects between one of two software versions to resolve a conflict limits the ability of the developer to further modify the software project (e.g., to incorporate aspects from one version into another version as part of resolving a conflict). Existing techniques may therefore limit flexibility.

Accordingly, aspects of the present disclosure present a software development conflict as a graphical representation (e.g., based on the underlying code and not necessarily including the underlying code) for each version, thereby facilitating developer understanding of the software conflict as it is implemented in each version. Additionally, embodiments of the disclosed aspects may enable a developer to modify the software project as part of conflict resolution, where the modification may be based on one of the conflicted versions, thus not restricting the developer to only choosing between versions of the software project. Thus, the disclosed aspects offer an improved user experience, greater flexibility and make more complex conflict resolution, versioning, and branching technologies available even in the context of a low- or no-code software development environment, among other benefits.

In at least some embodiments, software version control is used, where, for example, a state of the software project is assigned a corresponding version name/number. Additionally, different "branches" may be used, where a version of the software project (e.g., the "main branch") is duplicated into a new, separate branch. In examples, software branching resembles a tree, where a child branch has a corresponding parent (e.g., "upstream") node. In the present example, the main branch is thus the parent of the new branch.

According to some embodiments, different developers can thus work on different branches contemporaneously, and a downstream branch may eventually be merged back onto the main branch. However, in some embodiments, conflicts may arise as a result of software branching. For instance, if a first developer makes a change to the software project on one branch that corresponds to a different modification made by a second developer on a different branch (e.g., relating to the same portion of the software project), a conflict may exist between the two branches. Thus, "rebasing" is used to evaluate conflicts between two branches and to enable the branches to thus be merged accordingly. Otherwise, conflicts may cause the software project and any downstream processes or technical systems reliant on proper operation of the software project to fail.

As used herein, a "conflict" may be semantic and/or structural. In examples, a structural conflict relates to a structural change within the software project (e.g., adding/removing a section, moving a widget, etc.), whereas a semantic conflict relates to content of the software project (e.g., changing formulas relating to variables and/or selecting a different data source, etc.). In examples, traditional software rebasing and/or comparison techniques may more reliably identify structural conflicts, whereas semantic conflicts may be more difficult to identify and/or resolve.

Additionally, as noted above, applying versioning, branching, rebasing, and/or conflict resolution in the context of a graphical software development environment may be challenging, as rebasing and conflict resolution has traditionally been a code-heavy task. For instance, such aspects may typically entail a developer evaluating software code of the software project to resolve the conflict based thereon. However, in examples, a developer using the graphical software development environment may have comparatively more limited experience working with software code, as the software development environment may instead generate raw software code on behalf of the developer.

In examples, elements of the software project are represented in a tree structure, where the software project has a root node that defines the project and child nodes that define various elements of the software project accordingly. As noted above, the various elements of the software project may be hierarchical, where the software project has one or more pages, where each page has one or more sections, and each section has one or more sections/widgets therein (e.g., which may have one or more corresponding variables). Thus, the tree structure may further represent the elements of the software project according to such a hierarchy. In some embodiments, the tree structure is represented as a JavaScript Object Notation (JSON) object. It will be appreciated that such aspects are provided as examples, and any of a variety of additional or alternative elements and corresponding arrangements within a software project may be used.

Thus, according to certain embodiments of the present disclosure, each version/branch of the software project has a corresponding tree structure, such that changes/conflicts between different branches may be determined by comparing respective tree structures. As an example, a first tree structure is compared to a second tree structure to identify a set of changes associated therewith. For example, new nodes may be identified as additions, missing nodes may be identified as deletions, and nodes may be compared based on one or more properties defined therein (e.g., a name of an element, a position of an element within a canvas of the user interface, and/or a variable and/or data source from which the variable is determined).

In examples, an element may be marked as unused when it exists within both trees but is no longer in-use. According to certain embodiments, it may be determined an element has been moved within a canvas of the software project, for example as a result of comparing a property of an element that defines a location of the element accordingly and/or identifying an element having the same unique identifier that is located at different locations within a corresponding tree structure. Thus, it will be appreciated that any of a variety of changes may be determined between versions/branches according to aspects described herein.

According to embodiments, a subset of the identified changes may be determined to constitute one or more conflicts between the versions and/or branches. For example, if the same element has been changed in both versions, the changes may conflict. As another example, the same element may be changed, but each change may relate to a different property of the element, such that a change is not identified (e.g., each different changed property can be merged to yield an element having both changes). By contrast, changes that are not determined to be a conflict may instead ultimately be included into the merged version accordingly. Additionally, or alternatively, a listing of such changes may be presented for evaluation by a developer, thereby permitting the developer to review such changes and, in some instances, revert one or more such changes (e.g., thereby instead including an element in the merged version according to the main version instead of the branch version). It will therefore be appreciated that changes may be identified at different levels of granularity and/or according to any of a variety of data comparison techniques.

In at least some embodiments, a user interface is provided (e.g., via the software development environment) with which conflicts can be resolved, thereby facilitating rebasing between changed branches (e.g., a main version and a branch version). In examples, the user interface comprises an indication of the conflict as implemented in each software branch, thereby enabling a developer to actuate each respective indication and view the conflicted element of the software project as implemented by either the main version or the branch version.

For example, the user interface may initially present the software project according to the element as implemented in the branch version. In embodiments, when the developer actuates an indication relating to the main version, the user interface is updated to present the software project according to the element as implemented in the main version. Thus, the developer is able to compare graphical representations of both the branch version and the main version to evaluate which change to accept as part of the rebasing process. Such aspects may thus provide a user experience that is more approachable to developers having less experience with raw software code, as the developer is instead able to evaluate conflicts according to user interface aspects (e.g., as may thus be implemented by the underlying conflicted software code).

According to certain embodiments, the user interface enables the developer to continue modifying the software project (e.g., based on the branch version or based on the main version), thereby forming a third version of the software project during the rebasing project. Thus, the developer need not be confined to selecting either the main version or the branch version of the conflicted element and may instead continue to revise the software project even during the rebasing process. In examples, such a modification may thus form a temporary node (e.g., that is different than a corresponding node in either version of the tree structure) that is ultimately integrated into a resulting tree structure at the conclusion of the rebasing process (e.g., in place of a node from the tree structure of the branch version or a node from the tree structure of the main version).

In examples, the user interface permits a developer to review conflicts sequentially or out of order, among other examples. For instance, a developer may jump between conflicts (e.g., prior to resolving a given conflict) and, in such examples, a selected conflict resolution (or a set of modifications associated therewith) may be retained, such that the developer can view the selected conflict resolution upon returning to the conflict in a list of conflicts and prior to resolving (e.g., finalizing) the conflict during the rebasing process. Once a developer resolves a conflict via the rebasing user interface described herein, the conflict may be moved from the list of conflicts to a list of changes (e.g., as were determined as a result of comparing the two versions, such as the branch version and the main version according to the present example).

According to some embodiments, the user interface presents an option to revert a resolved conflict (e.g., such that the conflict is returned from the list of changes to the list of conflicts), thereby enabling the developer to reevaluate the conflict according to the aspects described above (e.g., to either select the element as implemented according to another version and/or to further modify the element via the rebasing user interface).

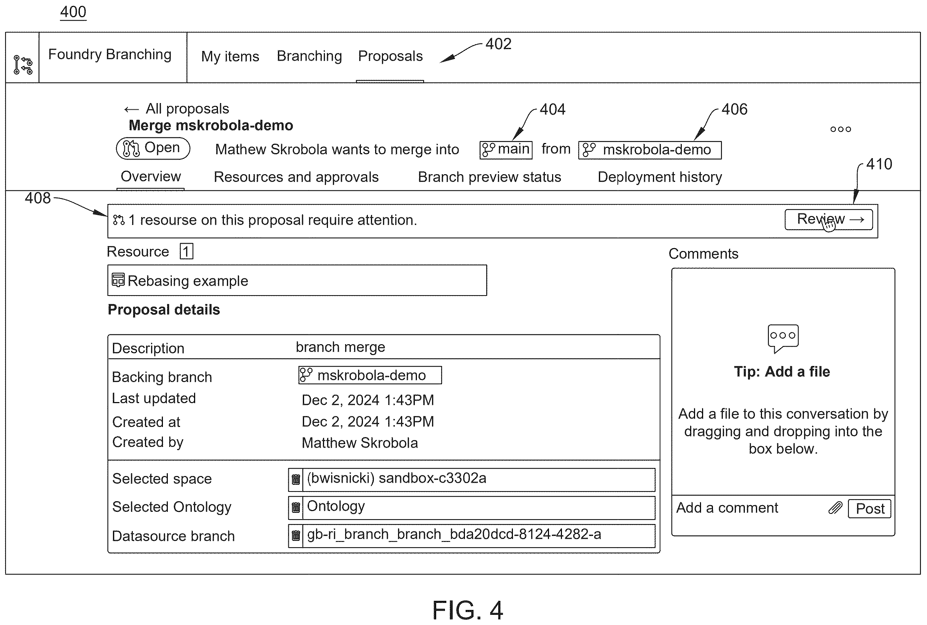

In at least some embodiments, a developer enters the rebasing user interface via a branch management user interface. For instance, the branch management user interface enables a developer to view branches of a software project, as well as proposals (e.g., which may each be associated with a branch of the software project). In instances where a branch conflicts with the main branch, an indication may be presented to the developer (e.g., as depicted in FIG. 4) such that, when actuated, the developer is presented with a rebasing user interface according to aspects described herein.

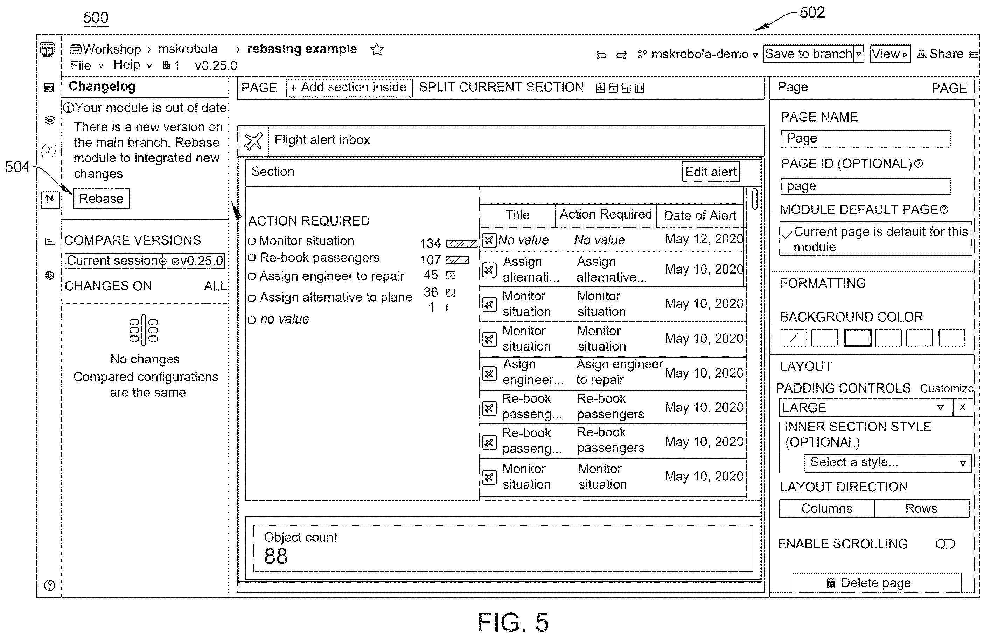

Additionally, or alternatively, an editing user interface of the software development environment enables the developer to enter the rebasing user interface (e.g., when the developer is attempting to merge a branch onto the main branch and/or when it is determined that the current branch version is out of date as compared to the main branch). Examples of such aspects are discussed below with respect to FIG. 5. Thus, while example instances where rebasing may be performed are described herein, it will be appreciated that the rebasing user interface may be accessed via any of a variety of additional or alternative contexts.

In general, therefore, embodiments provide, among other things, a convenient and flexible way of credibly assisting users in performing a technical task, namely conflict resolution, by means of a continued and/or guided human-machine interaction process.

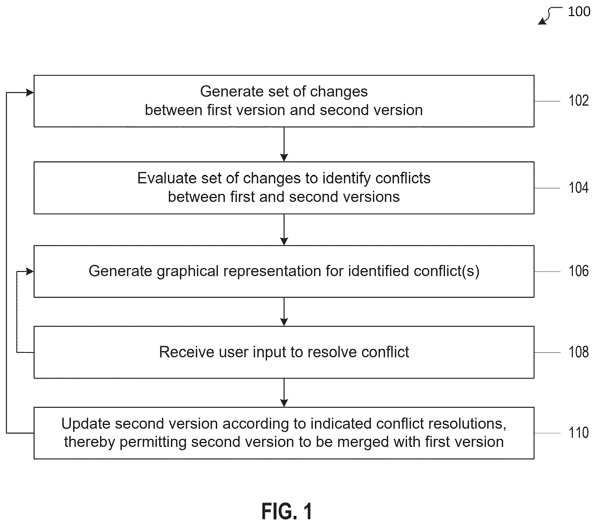

FIG. 1 illustrates an example method 100 for code rebasing and/or conflict resolution according to certain embodiments of the present disclosure. This diagram is merely an example. One of ordinary skill in the art would recognize many variations, alternatives, and modifications.

In some embodiments, some or all processes (e.g., steps) of the method 100 are performed by a system (e.g., the computing system 1000). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

At operation 102, a set of changes are generated between a first version and a second version. Returning to the above example, the first version may be a main version and the second version may be a branch version, though it will be appreciated that the disclosed aspects may be used to compare any of a variety of versions (e.g., versions on the same branch).

In at least some embodiments, the set of changes is generated by comparing a tree structure for the first version of the software project to a tree structure for the second version of the software project. For example, each respective tree structure may have a set of nodes, such that added, deleted, and changed nodes (e.g., as may have new, different, and/or removed properties) are identified accordingly. As another example, each version may be compared to a common version (e.g., a version from which the branch version was forked, which is also a parent node in the version history for the version on the main branch), such that a changelog for the first version (e.g., on the main branch) and a changelog for the second version (e.g., the branch version) are compared. It will therefore be appreciated that any of a variety of techniques may be used to generate a set of changes according to aspects of the present disclosure.

At operation 104, the set of changes is evaluated to identify a set of conflicts between the first and second versions. As noted above, a subset of the identified changes may be conflicts (e.g., structural and/or semantic conflicts), whereas changes that are not conflicts may be safely merged with the first version (e.g., without overwriting changes to the first version and/or introducing semantic/structural issues). A conflict may be identified as a result of determining each respective tree structure contains a node corresponding to the same element that has been modified. As another example, properties of the node may be evaluated to determine whether the same property was modified in both versions. In such an example, if different elements were modified between the two versions, a conflict may not be identified. Thus, it will be appreciated that conflicts may be identified according to any of a variety of levels of granularity (e.g., at a property level, at a widget level, at a section level, or at a page level, etc.). Additionally, it will be appreciated that any of a variety of techniques may be used to identify conflicts, from evaluating underlying software code to the application of a large language model (LLM) or other machine learning model to identify potential semantic conflicts, among other examples.

In examples, an identified conflict includes, but is not limited to, an added node, a removed node, or a modified node, among other examples. Given the hierarchical structure described with respect to at least some of the disclosed embodiments, it will be appreciated that a conflict may be identified at and/or between any of a variety of levels of a hierarchical tree structure. For example, if a first developer changes a section of a page of a software project on a branch version, while a second developer deletes the page of the software project of the main version, a conflict may be identified not just as a result of the changed section on the branch version, but due to the identification of the deleted page on the main version as it corresponds to a change that was made to a child node (e.g., the changed section) for the branch version.

In such examples, as a developer rebases the branch version according to aspects described herein, evaluating such a conflict may indicate that resolving the conflict according to the branch version entails including (e.g., re-adding) the page that was deleted in the main version (e.g., rather than merely modifying the element that was changed in the branch version). The present example is described in an instance where an immediate parent node has been deleted, though similar aspects are applicable in instances where multiple parent nodes (e.g., a grandparent node, a great-grandparent node, etc.) have been removed. In such examples, multiple successive nodes may be identified for inclusion as a conflict resolution candidate.

It will be appreciated that, while such aspects are provided as embodiments for resolving such a conflict (e.g., where a parent node does not exist in one of the versions), any of a variety of other techniques may be used in other examples. For instance, a modified element may instead be added to the first parent node that does exist in the hierarchical tree structure (e.g., if a parent node has been removed but a grandparent node remains, the element could instead be added to the grandparent node rather than re-adding the parent node) or, as another example, only the intervening elements that are needed may be added (e.g., rather than re-adding a whole page, with all of its constituent elements, a blank page may be added to which the conflicted element is added), among other examples.

At operation 106, a graphical representation is generated for an identified conflict. According to at least some embodiments, operation 106 comprises processing software code associated with a conflicted element of either the first version or the second version (e.g., as may be stored by a node of a respective tree structure) to generate a graphical representation for the element accordingly. In examples, the graphical representation includes a page, a section, and/or a widget of the software project accordingly, though it will be appreciated that additional/alternative elements may be used in other examples.

At operation 108, user input to resolve the conflict is received (e.g., from a developer). In examples, the user input comprises confirmation that the displayed graphical representation corresponds to a version of the conflicted element that should be used to resolve the conflict, a selection of a different version, and/or input to further modify the element from the rebasing user interface. It will therefore be appreciated that any of a variety of input may be received.

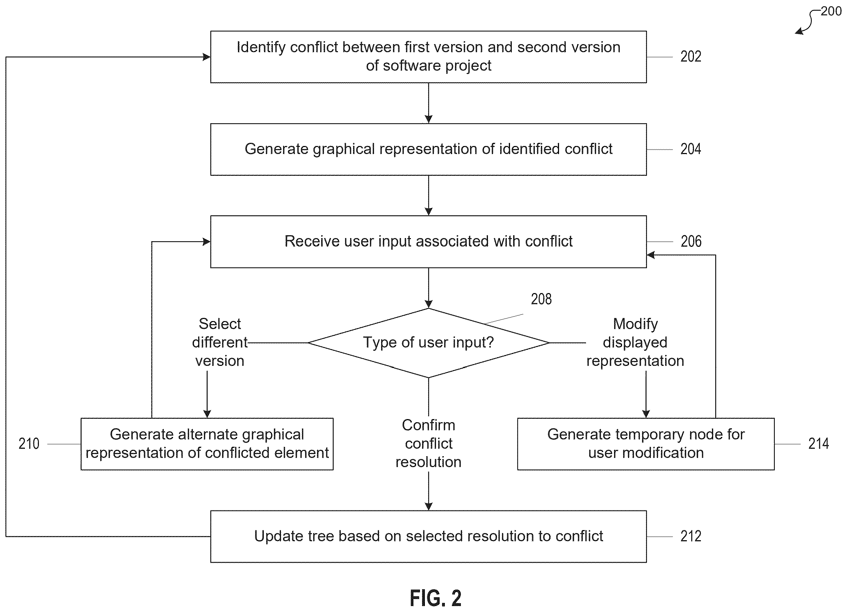

An arrow is illustrated from operation 108 to operation 106 to indicate that, in examples, a subsequent graphical representation is generated. For example, if a developer provides user input to select a different version for the same identified conflict, flow returns to operation 106 to generate a graphical representation for the different version of the conflicted element, thereby enabling the developer to graphically evaluate differences of the conflicted element between different versions of the software project (e.g., rather than evaluating software code). As another example, user input received at operation 108 may be to either accept the graphical representation that was displayed at operation 106 as a conflict resolution or to further modify the element via the rebasing user interface. In examples, flow iterates through operations 106 and 108 as a developer evaluates different versions of a conflicted element and/or addresses multiple conflicts (e.g., as were identified at operation 104). Additional examples of such aspects are discussed below with respect to FIG. 2.

Eventually, method 100 progresses to operation 110, where the second version is updated according to the indicated conflict resolutions (e.g., as were indicated by the user input received at operation 108), such that rebasing of the second version is complete and the second version may thus be merged onto the first version. In examples, operation 110 comprises updating a tree structure of the second version according to the conflict resolutions that were generated as a result of operations 106 and 108, thereby resulting in an updated tree structure accordingly. In some embodiments, the updated tree structure is retained on a branch (e.g., for subsequent development) and/or is merged onto a main branch (e.g., thereby integrating changes from the branch version back onto the main branch).

Although example method 100 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In certain examples, some or all processes (e.g., steps) of method 100 are performed by a computer and/or a processor directed by a code. For example, a computer includes a server computer and/or a client computer (e.g., a personal computer). In some examples, some or all processes (e.g., steps) of method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

FIG. 2 illustrates example method 200 for processing user input for code rebasing and/or conflict resolution according to certain embodiments of the present disclosure. This diagram is merely an example. One of ordinary skill in the art would recognize many variations, alternatives, and modifications.

In some embodiments, some or all processes (e.g., steps) of the method 200 are performed by a system (e.g., the computing system 1000). In certain examples, some or all processes (e.g., steps) of the method 200 are performed by a computer and/or a processor directed by a code. For example, a computer includes a server computer and/or a client computer (e.g., a personal computer). In some examples, some or all processes (e.g., steps) of the method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

At operation 202, a conflict is identified between a first version (e.g., a main version) and a second version (e.g., a branch version) of a software project. Aspects of operation 202 may be similar to those discussed above with respect to operation 104 and are therefore not redescribed in detail.

At operation 204, a graphical representation is generated for the identified conflict. In examples, operation 204 comprises generating a graphical representation for the conflicted element according to a first implementation as in the first version of the software project and/or a second implementation as in the second version of the software project. In examples, a user preference indicates whether the user's current branch/version (e.g., the second version) is used to provide such an initial graphical representation or whether the target branch/version (e.g., the first version, or the main version according to the present example) should be used. In at least some embodiments, the initial graphical representation is generated according to a conflicted element as implemented in the branch version.

While examples are described in which a developer alternates between graphical representations for a conflicted element, it will be appreciated that operation 204 may comprise generating multiple graphical representations (e.g., corresponding to each version), thereby enabling the developer to compare the graphical representations contemporaneously.

At operation 206, user input associated with the conflict is received. In embodiments where an initial graphical representation corresponding to the conflicted element as implemented according to the second version, the received user input may comprise an actuation of a user interface element corresponding to the other (e.g., first) version of the software project, thereby indicating the rebasing user interface is to be updated to present an alternative graphical representation of the conflicted element (e.g., according to the first version instead of the second version).

Accordingly, at operation 210, an alternate graphical representation is generated according to the version that was selected by the user input that was received at operation 206. Aspects of operation 210 may be similar to those discussed above with respect to operation 204. Method 200 then returns to operation 206, where a subsequent user input may be received (e.g., to revert to the initial graphical representation from the alternate graphical representation, to select the alternate graphical representation as the resolution for the conflicted element, or to modify the software project based on the alternate version).

Returning to determination 208, the user input received at operation 206 may comprise a modification to the software project in at least some embodiments. As discussed above, the software development environment (e.g., in which the rebasing user interface is implemented) enables a developer to develop the software project via a graphical user interface. Thus, the developer may manipulate or otherwise modify the graphical representation of the conflicted element (e.g., as was generated at operation 204) to engage in further development of the software project.

Accordingly, method 200 progresses to operation 214, where a temporary node is generated according to the received modification. As an example, a first tree structure relating to the first version comprises a first node for the conflicted element, whereas a second tree structure relating to the second version comprises a second node for the conflicted element. Accordingly, the temporary node is based on the first node or the second node, such that a modification made by the developer (e.g., which is based on the first version or the second version, respectively) is captured via the temporary node. Thus, if an indication is ultimately received to resolve the conflict for the conflicted element according to the temporary node (e.g., such that flow later branches from determination 208 to 212, as discussed below), the temporary node is used to generate the resulting tree structure for the conflicted element accordingly.

Finally, returning to determination 208, in at least some embodiments the received user input may comprise an indication to confirm a resolution of the conflict, for example either as a selection of an implementation of the conflicted element according to the first or the second version, or as a modification as described above. Accordingly, method 200 continues to operation 212, where the tree structure is updated based on the selected resolution to the identified conflict.

While method 200 is provided as an example method for processing an identified conflict, it will be appreciated that similar aspects may be used to process multiple conflicts as part of a rebasing process according to aspects described herein. As an example, multiple conflicts may be identified at operation 202, such that method 200 iterates through operations 204-214 as a developer evaluates each of the identified conflicts and selects a conflict resolution for each conflicted element accordingly. As noted above, the developer may jump between conflicts and need not sequentially resolve each of the identified conflicts. Eventually, a set of selected resolutions are processed to generate an updated tree structure at the conclusion of the rebasing process (e.g., that can thus be merged onto the main branch of the software project).

Although example method 200 has been shown using a selected group of processes, it will be appreciated that there can be many alternatives, modifications, and variations. For example, some of the processes may be expanded and/or combined. Other processes may be inserted into those noted above. Depending upon the embodiment, the sequence of processes may be interchanged with others replaced. Further details of these processes are found throughout the present disclosure.

In certain examples, some or all processes (e.g., steps) of method 200 are performed by a computer and/or a processor directed by a code. For example, a computer includes a server computer and/or a client computer (e.g., a personal computer). In some examples, some or all processes (e.g., steps) of method 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

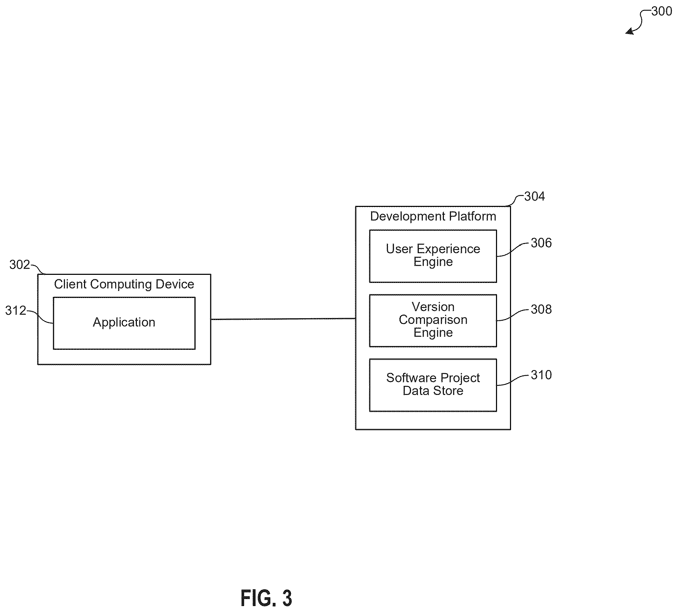

FIG. 3 illustrates an example system 300 in which aspects of the present disclosure may be practiced. As illustrated, system 300 includes client computing device 302 and development platform 304. In examples, application 312 is used to access a software development environment provided by development platform 304. For instance, application 312 may be a web browser application used to access a website generated by user experience engine 306 that enables user interface-based software development and provides a rebasing user interface according to aspects described herein. It will be appreciated that, while system 300 is illustrated according to a client/server paradigm, similar aspects may be used for software that runs locally (e.g., an instance where application 312 incorporates at least some of the functionality described herein with respect to user experience engine 306, version comparison engine 308, and software project data store 310), among other examples.

In embodiments, user experience engine 306 of development platform 304 generates a user interface (e.g., as a website that is accessible via application 312 of client computing device 302) with which a developer develops a software application according to aspects described herein. The software development environment provided by user experience engine 306 includes a rebasing user interface according to aspects described herein, which may be accessible when the developer requests to merge a branch version onto a main version, among other examples. Aspects of such processing may be similar to those discussed above with respect to operations 106-110 of method 100 and/or operations 204-212 of method 200, and are therefore not necessarily redescribed in detail.

According to at least some embodiments, version comparison engine 308 evaluates a first version and a second version to determine a set of changes and a set of conflicts associated therewith. Aspects of such processing may be similar to those discussed above with respect to operations 102 and/or 104 of method 100, and/or operation 202 of method 200, and are therefore not necessarily redescribed in detail. For example, the first version is a main version (e.g., as may have been previously created by the developer and/or as may have been developed at least in part by another developer via another client computing device, not pictured) and the second version is a branch version.

Development platform 304 further comprises software project data store 304, which may store data for a given software project, including multiple versions/branches according to aspects described herein. It will be appreciated that, while system 300 is illustrated as an example in which development platform 304 includes software project data store 310, any of a variety of additional or alternative storage may be used. For example, at least a part of the software project may be stored by client computing device 302 and/or at a third-party computing device, among other examples.

While system 300 is illustrated as including one client computing device 302 and one development platform 304, it will be appreciated that any number of such elements may be used in other examples. Further, while example functionality is described in relation to specific elements of the illustrated system, it will be appreciated that, in other examples, such functionality may be distributed according to any of a variety of other paradigms.

In some cases, various components in system 300 can execute software or firmware stored in non-transitory computer-readable medium to implement various processing steps. Various components and processors of system 300 can be implemented by one or more computing devices including, but not limited to, circuits, a computer, a cloud-based processing unit, a processor, a processing unit, a microprocessor, a mobile computing device, and/or a tablet computer. In some cases, various components of system 300 can be implemented on a shared computing device. Alternatively, a component of system 300 can be implemented on multiple computing devices. In some implementations, various modules and components of system 300 can be implemented as software, hardware, firmware, or a combination thereof. In some cases, various components of system 300 can be implemented in software or firmware executed by a computing device.

Various components of system 300 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

FIG. 4 illustrates an example user interface 400 from which code rebasing can be initiated according to certain embodiments of the present disclosure. As illustrated, user interface 400 enables a developer to evaluate a proposal for a given software project. For instance, proposals tab 402 has been selected, and user interface 400 is generated for potentially merging second branch 406 (e.g., "mskrobola-demo") onto first branch 404 (e.g., "main").

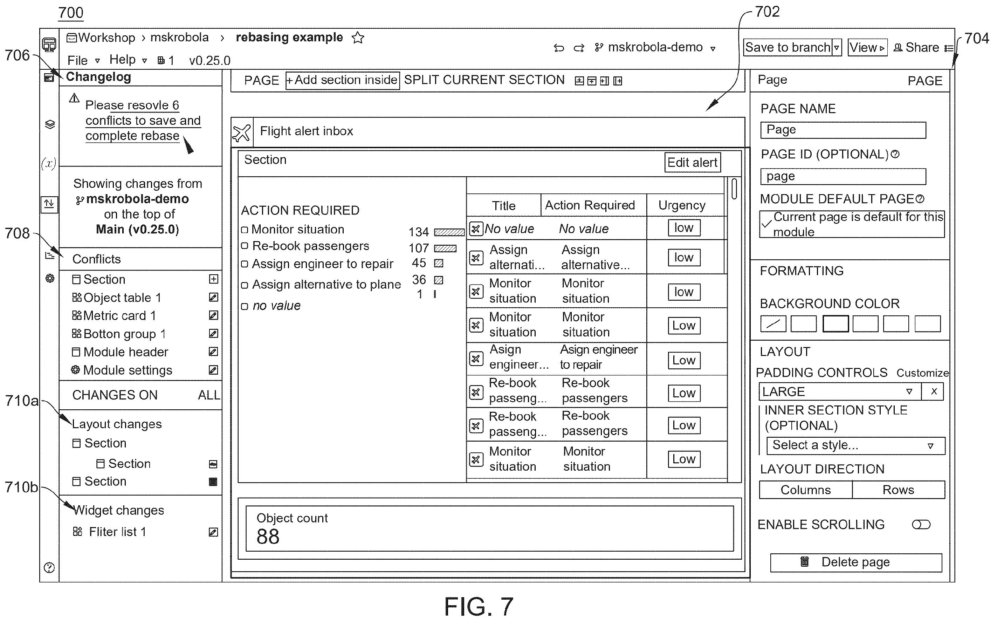

Accordingly, as a result of determining one or more conflicts exist between second branch 406 and first branch 404 (e.g., as a result of performing aspects of operations 102 and 104 of method 100 and/or operation 202 of method 200), message 408 is presented to indicate that a developer is to perform rebasing prior to merging the two versions. Accordingly, once "review" button 410 is actuated, a rebasing user interface is presented according to aspects of the present disclosure. Example aspects of such a rebasing user interface are discussed below with respect to FIGs. 7-9.

FIG. 5 illustrates another example user interface 500 from which code rebasing can be initiated according to certain embodiments of the present disclosure. As illustrated, user interface 500 comprises indication 502 of a current branch (e.g., "mskrobola-demo") and "rebase" button 504 to initialize a rebasing user interface according to aspects described herein.

Thus, user interface 400 of FIG. 4 and user interface 500 of FIG. 5 each provide example user interface elements (e.g., buttons 410 and 504, respectively) that, when actuated, initialize a rebasing user interface with which conduct a rebasing process according to aspects described herein.

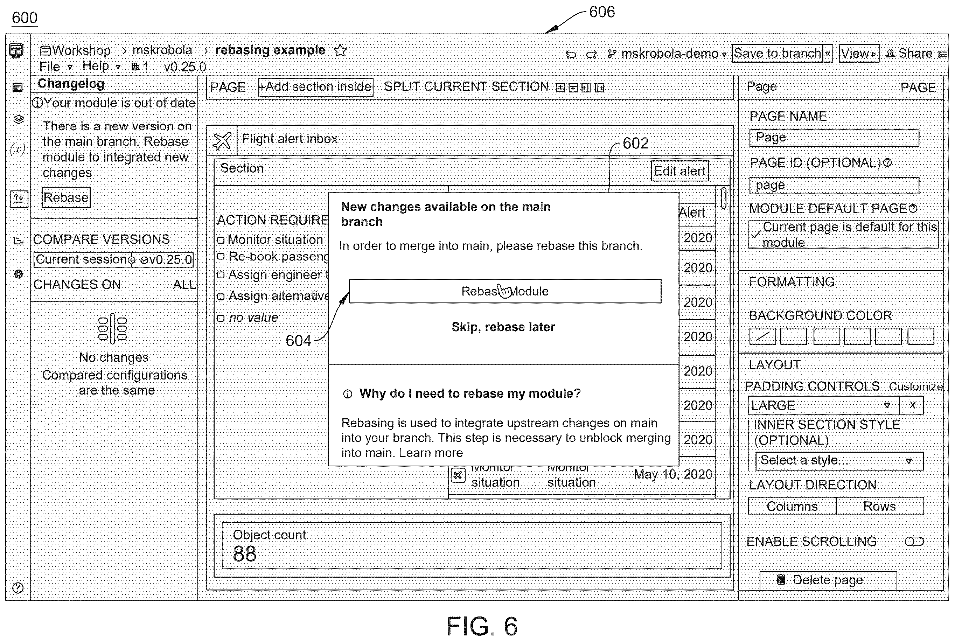

FIG. 6 illustrates another example user interface 600 from which code rebasing can be initiated according to certain embodiments of the present disclosure. As illustrated, user interface 600 includes window 602, which notes the current (e.g., branch) version needs to be rebased before it can be merged into another (e.g., main) branch. Accordingly, once a developer actuates button 604, a rebasing user interface is initialized according to aspects described herein. Example aspects of such a rebasing user interface are discussed below with respect to FIGs. 7-9.

In examples, window 602 is presented in response to user actuation of button 504 discussed above with respect to FIG. 5, thereby presenting additional information to the developer and confirming that the developer intends to initiate a rebasing process. Alternatively, the developer can instead decide to return to the project editor of the software development environment (e.g., by actuating "Skip, rebase later"). While window 602 is depicted over an example project editor 606, it will be appreciated that similar aspects may be presented in any of a variety of other contexts (e.g., over user interface 400 discussed above with respect to FIG. 4).

FIG. 7 illustrates an example user interface 700 for code rebasing according to certain embodiments of the present disclosure. As illustrated, user interface 700 includes project pane 702, property pane 704, and changelog pane 706. According to at least some embodiments, project pane 702 comprises a display of one or more elements of a software project (e.g., pages, sections, widgets, variables, etc.), thereby enabling a developer to modify the software project accordingly. Property pane 704 is usable to modify one or more properties of an element of a software project. As illustrated, property pane 704 presents properties of a page of the software application, though the properties presented by property pane 704 may change depending on which element is selected within project pane 702.

Changelog pane 706 includes conflicts section 708 and a changes section listing layout changes 710a and widget changes 710b. While the present example depicts changes grouped by element (e.g., sections/widgets), it will be appreciated that, in other examples, such elements need not be grouped or may be grouped/filtered according to any of a variety of criteria.

In embodiments, the changes section and conflicts section 708 are populated as a result of performing aspects similar to those discussed above with respect to operations 102 and 104 of method 100 in FIG. 1. Thus, a developer is able to review layout changes 710a and widget changes 710b when rebasing the software project (e.g., from the "mskrobola-demo" branch version to the main version).

Further, the rebasing user interface enables the developer to review conflicts between the software versions via conflicts section 708, for example by selecting a conflict of the listed conflict and resolving the selected conflict accordingly. As noted above, conflicts need not be resolved sequentially, such that the developer may alternate between various conflicts prior to resolving them (at which point a resolve conflict would be moved from conflicts section 708 to the changes section).

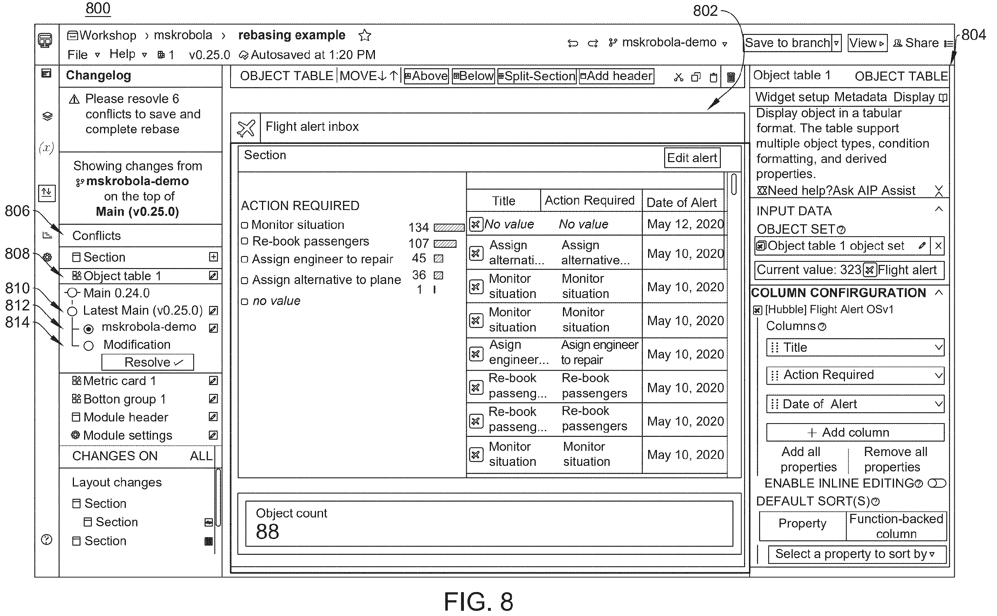

FIG. 8 illustrates an example user interface 800 for conflict resolution according to certain embodiments of the present disclosure. Aspects of user interface 800 are similar to those discussed above with respect to user interface 700 and are therefore not necessarily redescribed in detail. For example, user interface 800 comprises project pane 802, property pane 804, and conflicts section 806, which are similar to project pane 702, property pane 704, and conflicts section 708 discussed above with respect to FIG. 7.

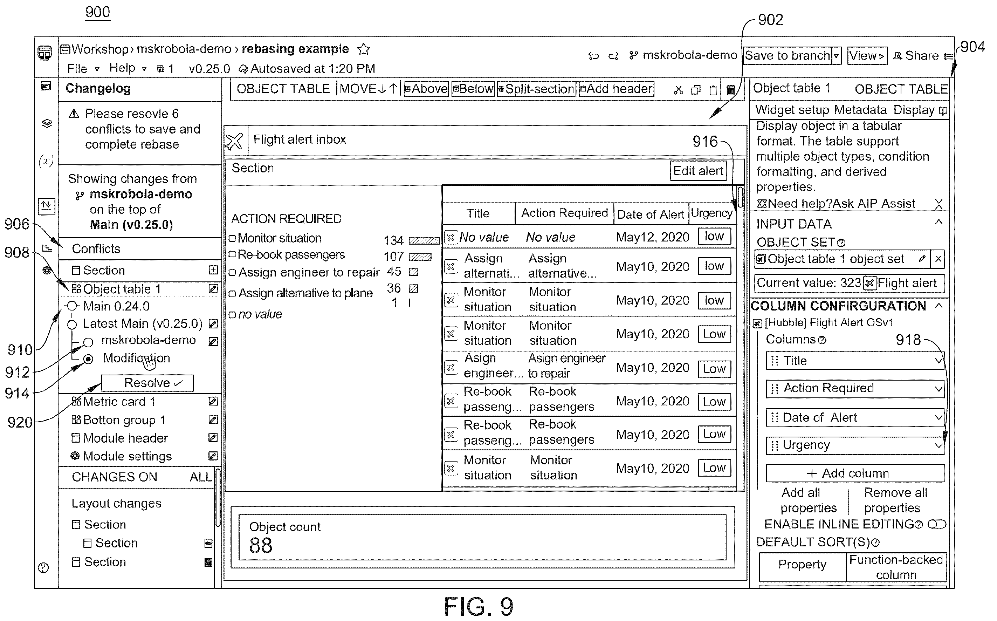

As illustrated within conflicts section 806, a developer has actuated conflicted element 808, revealing a display of first indication 810 corresponding to a first version (e.g., a main version) and a second indication 812 corresponding to a second version (e.g., a branch version). Thus, the developer may actuate indication 810 or 812 to change between the conflicted element (e.g., "Object table 1") as implemented by each respective version. When changing implementations of the conflicted element, project pane 802 and/or property pane 804 may be updated accordingly (e.g., similar to operation 106 in method 100 and/or operation 204 in method 200), thereby enabling the developer to compare versions of the conflicted element. User interface 800 further comprises third indication 814 corresponding to a third version, which has been created as a result of the developer modifying one of the two versions (e.g., the main version or the branch version) accordingly (e.g., similar to operation 214 discussed above with respect to method 200 of FIG. 2). Additional examples of such aspects are discussed below with respect to FIG. 9.

FIG. 9 illustrates another example user interface 900 for conflict resolution according to certain embodiments of the present disclosure. Aspects of user interface 900 are similar to those discussed above with respect to user interface 700 and user interface 800, and are therefore not necessarily redescribed in detail. For example, user interface 900 comprises project pane 902, property pane 904, conflicts section 906, conflicted element 908, first indication 910, second indication 912, and third indication 914, which are similar to corresponding elements of user interface 700 and/or user interface 800 discussed above with respect to FIGs. 7 and 8, respectively.

User interface 900 depicts an example in which the developer has actuated third indication 914 to view a version of the software project that has been modified via the rebasing user interface that is thus different than the first and second versions. As noted above, project pane 902 has been updated in response to the actuation to illustrate the conflicted element as implemented in the modified version, where, for example, an additional column 916 (e.g., "Urgency") has been added to the element (e.g., "Object table 1"). Additionally, property pane 904 has similarly been updated to reflect the change, where column property 918 similarly reflects the added column (e.g., "Urgency").

Thus, according to aspects described herein, a developer is able to view different implementations of the conflicted element by actuating indications 910, 912, and 914 (also referred to herein as conflict resolution candidates), and to modify the software project via the rebasing user interface accordingly. Once the developer has resolved the conflict, actuating "resolve" button 920 will cause the developers selection (e.g., between versions) and/or modifications (e.g., according to the third version 914) to be saved for inclusion in the resulting software project that is generated at the conclusion of the rebasing process (e.g., similar to operation 110 and/or operation 212 in FIGs. 1 and 2, respectively). However, as noted above, the developer need not actuate "resolve" button 920 prior to reviewing other conflicted elements, and the current state of the conflict resolution may be retained even as the developer reviews other conflicted elements.

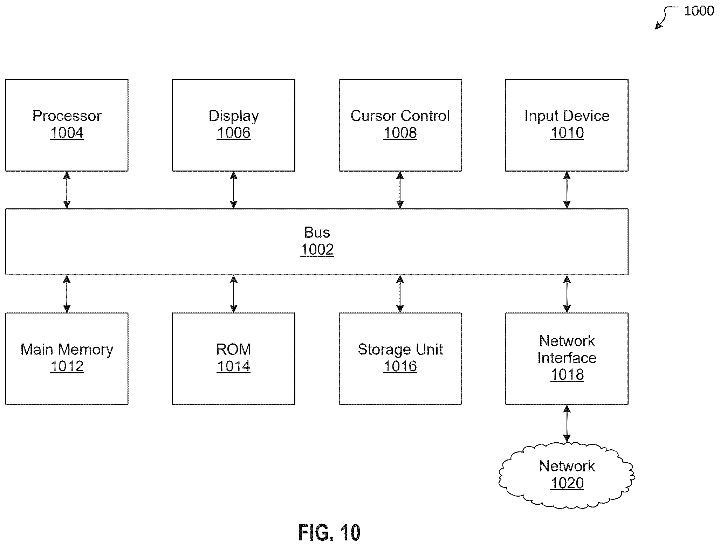

FIG. 10 is a simplified diagram showing a computing system for implementing aspects of the present disclosure. This diagram is merely an example, which should not unduly limit the scope of the claims. One of ordinary skill in the art would recognize many variations, alternatives, and modifications.

The computing system 1000 includes a bus 1002 or other communication mechanism for communicating information, a processor 1004, a display 1006, a cursor control component 1008, an input device 1010, a main memory 1012, a read only memory (ROM) 1014, a storage unit 1016, and a network interface 1018. In some embodiments, some or all processes (e.g., steps) of the method 100 and/or the method 200 are performed by the computing system 1000. In some examples, the bus 1002 is coupled to the processor 1004, the display 1006, the cursor control component 1008, the input device 1010, the main memory 1012, the read only memory (ROM) 1014, the storage unit 1016, and/or the network interface 1018. In certain examples, the network interface is coupled to a network 1020. For example, the processor 1004 includes one or more general purpose microprocessors. In some examples, the main memory 1012 (e.g., random access memory (RAM), cache and/or other dynamic storage devices) is configured to store information and instructions to be executed by the processor 1004. In certain examples, the main memory 1012 is configured to store temporary variables or other intermediate information during execution of instructions to be executed by processor 1004. For examples, the instructions, when stored in the storage unit 1016 accessible to processor 1004, render the computing system 1000 into a special-purpose machine that is customized to perform the operations specified in the instructions. In some examples, the ROM 1014 is configured to store static information and instructions for the processor 1004. In certain examples, the storage unit 1016 (e.g., a magnetic disk, optical disk, or flash drive) is configured to store information and instructions.

In some embodiments, the display 1006 (e.g., a cathode ray tube (CRT), an LCD display, or a touch screen) is configured to display information to a user of the computing system 1000. In some examples, the input device 1010 (e.g., alphanumeric and other keys) is configured to communicate information and commands to the processor 1004. For example, the cursor control component 1008 (e.g., a mouse, a trackball, or cursor direction keys) is configured to communicate additional information and commands (e.g., to control cursor movements on the display 1006) to the processor 1004.

According to certain embodiments, a method for rebasing a software project is provided. The method comprises: determining a set of changes between a branch version of the software project and a main version of the software project; identifying, from the set of changes, a conflict between the branch version and the main version; generating a user interface comprising at least one of: a first graphical representation of the conflict as implemented in the main version; or a second graphical representation of the conflict as implemented in the branch version; receiving, via the user interface, user input indicating a resolution for the presented conflict; and updating the branch version of the software project according to the indicated resolution, thereby resolving the conflict to facilitate merging of the branch of the software project onto the main version of the software project; wherein the method is performed using one or more processors. For example, the method is implemented according to at least Figure 1, Figure 2, and/or Figure 3.

In an example, the user input indicating the resolution for the presented conflict comprises a modification to the software project that is different from the branch version and the main version; and the branch version is updated according to the modification to the software project. In another example, the method further comprises switching between the first graphical representation of the conflict and the second graphical representation of the conflict in response to user input. In an example, determining the set of changes comprises comparing a first tree of elements for the branch version to a second tree of elements for the main version to identify the set of changes. In a further example, the first tree of elements and the second tree of elements are each JavaScript Object Notation (JSON) objects that comprise nodes relating to at least one of a variable element, a widget element, a page element, or a section element of the software project. In yet another example, the set of changes comprises at least one of: a first node that is in the first tree of elements that is not in the second tree of elements because it was deleted in the main version of the software project; or a second node that is in the second tree of elements that is not in the first tree of elements, wherein the second node was modified in the main branch of the software project and is not in the first tree of elements because it was deleted in the branch version of the software project. In a further still example, the conflict from the set of changes is identified based on a node from the first tree of elements that conflicts with a node of the second tree of elements. In another example, the node from the first tree of elements comprises a property that conflicts with a property of the node of the second tree of elements. In a further example, the user interface further comprises a list of changes that are not identified as conflicts from the set of changes. In yet another example, the list of changes is updated to include an indication of the conflict in response to receiving the user input indicating the resolution. In a further still example, identifying the conflict from the set of changes comprises processing the software project using a machine learning model to identify the conflict between the main version and the branch version.

According to some embodiments, another method for rebasing a software project is provided. The method comprises: determining a set of changes between a branch version of the software project and a main version of the software project; identifying, from the set of changes, a conflict between the branch version and the main version; generating a user interface comprising: a first graphical representation of the conflict as implemented in the branch version; and in response to user input indicating a selection of the conflict as implemented in the main version, a second graphical representation of the conflict as implemented in the main version; receiving, via the user interface, user input indicating a resolution for the presented conflict; and updating the branch version of the software project according to the indicated resolution, thereby resolving the conflict to facilitate merging of the branch of the software project onto the main version of the software project; wherein the method is performed using one or more processors. For example, the method is implemented according to at least Figure 1, Figure 2, and/or Figure 3.

In an example, the user input indicating the resolution for the presented conflict comprises a modification to the software project that is different from the branch version and the main version; and the branch version is updated according to the modification to the software project. In another example, determining the set of changes comprises comparing a first tree of elements for the branch version to a second tree of elements for the main version to identify the set of changes. In a further example, the user interface further comprises a list of changes that are not identified as conflicts from the set of changes. In yet another example, the list of changes is updated to include an indication of the conflict in response to receiving the user input indicating the resolution.

According to certain embodiments, a system for rebasing a branch of a software project is provided. The system comprises: one or more memories comprising instructions stored thereon; and one or more processors configured to execute the instructions and perform operations comprising: determining a set of changes between a branch version of the software project and a main version of the software project; identifying, from the set of changes, a conflict between the branch version and the main version; generating a user interface comprising at least one of: a first graphical representation of the conflict as implemented in the main version; or a second graphical representation of the conflict as implemented in the branch version; receiving, via the user interface, user input indicating a resolution for the presented conflict; and updating the branch version of the software project according to the indicated resolution, thereby resolving the conflict to facilitate merging of the branch of the software project onto the main version of the software project. For example, the system is implemented according to at least the aspects described with respect to Figure 1, Figure 2, Figure 3, and/or Figure 4.

In an example, the user input indicating the resolution for the presented conflict comprises a modification to the software project that is different from the branch version and the main version; and the branch version is updated according to the modification to the software project. In another example, the operations further comprise: switching between the first graphical representation of the conflict and the second graphical representation of the conflict in response to user input. In yet another example, the user interface further comprises a list of changes that are not identified as conflicts from the set of changes. In a further still example, the list of changes is updated to include an indication of the conflict in response to receiving the user input indicating the resolution.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated.

## Claims

1. A method for rebasing a software project, the method comprising:
determining a set of changes between a branch version of the software project and a main version of the software project;
identifying, from the set of changes, a conflict between the branch version and the main version;
generating a user interface comprising at least one of:
a first graphical representation of the conflict as implemented in the main version; or
a second graphical representation of the conflict as implemented in the branch version;
receiving, via the user interface, user input indicating a resolution for the presented conflict; and
updating the branch version of the software project according to the indicated resolution, thereby resolving the conflict to facilitate merging of the branch of the software project onto the main version of the software project;
wherein the method is performed using one or more processors.

2. The method of claim 1, wherein:
the user input indicating the resolution for the presented conflict comprises a modification to the software project that is different from the branch version and the main version; and
the branch version is updated according to the modification to the software project.

3. The method of claim 1 or claim 2, further comprising switching between the first graphical representation of the conflict and the second graphical representation of the conflict in response to user input.

4. The method of any preceding claim, wherein determining the set of changes comprises comparing a first tree of elements for the branch version to a second tree of elements for the main version to identify the set of changes.

5. The method of claim 4, wherein the first tree of elements and the second tree of elements are each JavaScript Object Notation (JSON) objects that comprise nodes relating to at least one of a variable element, a widget element, a page element, or a section element of the software project.

6. The method of claim 4 or claim 5, wherein the set of changes comprises at least one of:
a first node that is in the first tree of elements that is not in the second tree of elements because it was deleted in the main version of the software project; or
a second node that is in the second tree of elements that is not in the first tree of elements, wherein the second node was modified in the main branch of the software project and is not in the first tree of elements because it was deleted in the branch version of the software project.

7. The method of any of claims 4 to 6, wherein the conflict from the set of changes is identified based on a node from the first tree of elements that conflicts with a node of the second tree of elements.

8. The method of claim 7, wherein the node from the first tree of elements comprises a property that conflicts with a property of the node of the second tree of elements.

9. The method of any preceding claim, wherein the user interface further comprises a list of changes that are not identified as conflicts from the set of changes.

10. The method of claim 9, wherein the list of changes is updated to include an indication of the conflict in response to receiving the user input indicating the resolution.

11. The method of any preceding claim, wherein identifying the conflict from the set of changes comprises processing the software project using a large language model to identify the conflict between the main version and the branch version.

12. A method for rebasing a software project, the method comprising:
determining a set of changes between a branch version of the software project and a main version of the software project;
identifying, from the set of changes, a conflict between the branch version and the main version;
generating a user interface comprising:
a first graphical representation of the conflict as implemented in the branch version; and
in response to user input indicating a selection of the conflict as implemented in the main version, a second graphical representation of the conflict as implemented in the main version;
receiving, via the user interface, user input indicating a resolution for the presented conflict; and
updating the branch version of the software project according to the indicated resolution, thereby resolving the conflict to facilitate merging of the branch of the software project onto the main version of the software project;
wherein the method is performed using one or more processors.

13. The method of claim 12, wherein:
the user input indicating the resolution for the presented conflict comprises a modification to the software project that is different from the branch version and the main version; and
the branch version is updated according to the modification to the software project.

14. The method of claim 12 or claim 13, wherein determining the set of changes comprises comparing a first tree of elements for the branch version to a second tree of elements for the main version to identify the set of changes.

15. A system for rebasing a branch of a software project, the system comprising:
one or more memories comprising instructions stored thereon; and
one or more processors configured to execute the instructions and perform the method of any preceding claim.
